# EUROPEAN PATENT APPLICATION

(11) **EP 4 439 399 A2**
(43) Date of publication of application: **02.10.2024**
(21) Application number: 24158298.0
(22) Date of filing: 19.02.2024
(51) Int. Cl.: G06N 3/12

(54) **SYNTHESIZING ML PIPELINES FOR AUTOMATED PIPELINE RECOMMENDATIONS**

(30) Priority: 31.03.2023 US 202318194486
(71) Applicant: FUJITSU LIMITED, Kawasaki-shi, Kanagawa 211-8588 (JP)
(72) Inventor: Chen, Wei-Peng, Fremont, CA (US); Hasegawa, Sou, Mountain View, CA (US); Liu, Lei, San Jose, CA (US); Bahrami, Mehdi, San Jose, CA (US)
(74) Representative: Hoffmann Eitle

(57) **Abstract**

According to an aspect of an embodiment, operations include receiving data comprising tabular datasets and code files. The operations further include generating a task specification corresponding to each dataset and determining data type information for features of each dataset. The operations further include extracting a plurality of API methods from the code files and generating an ML pipeline based on the data type information and the task specification. The operations further include obtaining variations of the ML pipeline based on options associated with at least one ML component and generating a database of pipelines based on the ML pipeline and the variations. The operations further include selecting candidate ML pipelines from the database based on an optimization approach and executing the candidate ML pipelines to evaluate a performance of each candidate pipeline on test data. The operations further include obtaining a training corpus of ML pipelines for pipeline recommendation.

## Description

### FIELD

The embodiments discussed in the present disclosure are related to synthesizing machine learning (ML) pipelines for automated pipeline recommendations.

### BACKGROUND

Advancements in the field of machine learning and Artificial Intelligence (AI) have led to development of automated machine learning (AutoML) algorithms. Meta-learning based AutoML may require a training corpus that may include a large number of pipelines in order to build a training model for AutoML. The training corpus may be generated by collecting a number of human written pipelines and by applying program analysis methods to extract labels with additional manual annotations. Such manual or semi-automated way to create the training corpus may be time-consuming and cost ineffective.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

### SUMMARY

According to an aspect of an embodiment, a method may include a set of operations which may include receiving data that includes a set of tabular datasets and a set of code files, each of which may include a computer-executable code for a Machine Learning (ML) task. The set of operations may further include generating a task specification corresponding to each tabular dataset of the set of tabular datasets and determining data type information for features of each tabular dataset of the set of tabular datasets. The set of operations may further include extracting, from the set of code files, a plurality of Application Programming Interface (API) methods associated with ML pipeline components and generating an ML pipeline based on the data type information and the task specification. The set of operations may further include obtaining variations of the ML pipeline based on options associated with at least one pipeline component of the ML pipeline and generating a database of ML pipelines based on the ML pipeline and the variations for each tabular dataset of the set of tabular datasets. The set of operations may further include selecting a set of candidate ML pipelines from the database of ML pipelines based on an optimization approach and executing the set of candidate ML pipelines to evaluate a performance of each candidate ML pipeline of the set of candidate ML pipelines on test data. The set of operations may further include obtaining a training corpus of ML pipelines from the set of candidate ML pipelines for an ML pipeline recommendation task based on the evaluation.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

### BRIEF DESCRIPTION OF THE DRAWINGS

Example embodiments will be described and explained with additional specificity and detail through the use of the accompanying drawings in which:
FIG. 1 is a diagram representing an example environment related to synthesizing machine learning (ML) pipelines for automated pipeline recommendations;
FIG. 2 is a block diagram that illustrates an exemplary electronic device for synthesizing machine learning (ML) pipelines for automated pipeline recommendations;
FIG. 3 is a diagram that illustrates a flowchart of an example method for synthesizing machine learning (ML) pipelines for automated pipeline recommendations;
FIG. 4 is a diagram that illustrates a flowchart of an example method for extracting a plurality of application programming interface (API) methods associated with ML pipeline components
FIG. 5 is a diagram that illustrates a flowchart of an example method for generation of a ML pipeline based on a subset of templates;
FIG. 6 is a diagram that illustrates a flowchart of an example method for generation of a ML pipeline recommendation;
FIG. 7 is a diagram that illustrates an exemplary scenario of a ML pipeline generated based on a subset of templates; and
FIGs. 8A and 8B are diagrams that collectively illustrate an exemplary scenario for a ML pipeline generation based on data type information, a task specification, and a subset of templates,
all according to at least one embodiment described in the present disclosure.

### DESCRIPTION OF EMBODIMENTS

Some embodiments described in the present disclosure relate to methods and systems for synthesizing machine learning (ML) pipelines for automated pipeline recommendations. In the present disclosure, data that includes a set of tabular datasets and a set of code files may be received. Each of the set of code files may include a computer-executable code for an ML task. Upon reception of the set of tabular datasets and the set of code files, a task specification corresponding to each tabular dataset of the set of tabular datasets may be generated. Thereafter, data type information may be determined for features of each tabular dataset of the set of tabular datasets and a plurality of application programming interface (API) methods associated with ML pipeline components may be extracted from the set of code files. Based on the data type information and the task specification, a ML pipeline may be generated. Thereafter, variations of the ML pipeline may be obtained based on options associated with at least one pipeline component of the ML pipeline. Based on the ML pipeline and the variations for each tabular dataset of the set of tabular datasets, a database of ML pipelines may be generated. A set of candidate ML pipelines may be selected from the database of ML pipelines based on an optimization approach. The set of candidate ML pipelines may be executed to evaluate a performance of each candidate ML pipeline of the set of candidate ML pipelines on test data. A training corpus of ML pipelines may be obtained from the set of evaluated ML pipelines for an ML pipeline recommendation task based on the evaluation.

According to one or more embodiments of the present disclosure, the technological field of machine learning (ML) and software development may be improved by configuring a computing system in a manner that the computing system may be able to utilize a training corpus of ML pipelines to synthesize ML pipelines for automated pipeline recommendations.

Meta-learning based automated machine learning (AutoML) models may require a training corpus that may include a number of pipelines. The training corpus may be generated by collecting a number of human written pipelines and by applying program analysis methods to extract labels with additional manual annotations. The process of training corpus creation in existing meta-learning based AutoML approaches may face a number of challenges due to presence limited resources of machine learning pipelines and variations in a quality of open-source pipelines. Due to the presence limited resources of machine learning pipelines, a substantial effort may be required to scrape machine learning (ML) pipelines from various open-source communities and repositories. Moreover, there may be no guarantee that such open-source codes can be utilized for commercial purposes. As the open-source code may be contributed by data scientists with various levels of skills and experiences, the quality of the open-source pipelines may vary. In addition, it may not be trivial to reproduce or rerun the open-source pipelines in order to obtain a performance result because of different environments or outdated libraries. Also, the machine learning pipelines contributed by professional or novice data scientists to open-source community may include dynamic range of machine learning pipelines. Therefore, it may be difficult to create a fully automated method to extract the machine learning components by a program parser. For instance, the ML pipelines might be written inside a customized function instead of a standard API call. In other words, using manual or semi-manual approach to extract machine learning components may be time-consuming and may be prone to errors. In other words, collecting ML pipelines, labelling the ML components, or manually rewriting the ML pipelines may require great efforts. Therefore, it may not be easy to develop the training corpus.

The disclosed system may provide a fully automated method to synthesize a number of high performances ML pipelines that may be intellectual property (IP)-safe. With a greater number of ML pipelines and potentially with better performance a better meta-model for AutoML systems may be trained by the synthesized training corpus. The disclosed system may obtain the training corpus that may be sustainable, scalable, expandable, and IP-safe. As discussed, a manual creation of the training corpus creation may be time consuming and cost ineffective. Maintaining the training corpus may be also a major issue since libraries used in the human written ML pipelines may no longer exist and therefore, the training corpus may be outdated. However, the disclosed system may generate the ML pipeline based on the data type information and the task specification associated with each tabular dataset of the set of tabular datasets. Thereafter, the disclosed system may obtain variations of the ML pipeline based on options associated with at least one pipeline component of the ML pipeline to generate the database of ML pipelines. The versions of libraries utilized in the generation of ML pipelines may be recorded. Latest versions of libraries may be utilized in the generation process of ML pipelines. Since the database of ML pipelines is automatically generated based on the specified versions of libraries and when required to train the metamodel, the training corpus may be reconstructed and may not be outdated. Moreover, the disclosed system may obtain the training corpus that may be scalable.

The disclosed system may obtain the training corpus that may be expandable. The disclosed system may add a new preprocessing component or try a new ML algorithm and then evaluate a performance of new elements under the existing tabular datasets. On the other hand, it may not be easy to evaluate an effect of a new preprocessing component that may appear in some human written ML pipelines since such new preprocessing components may not be widely used. Thus, there may not be enough training samples of such preprocessing components in the training corpus. Embodiments of the present disclosure are explained with reference to the accompanying drawings.

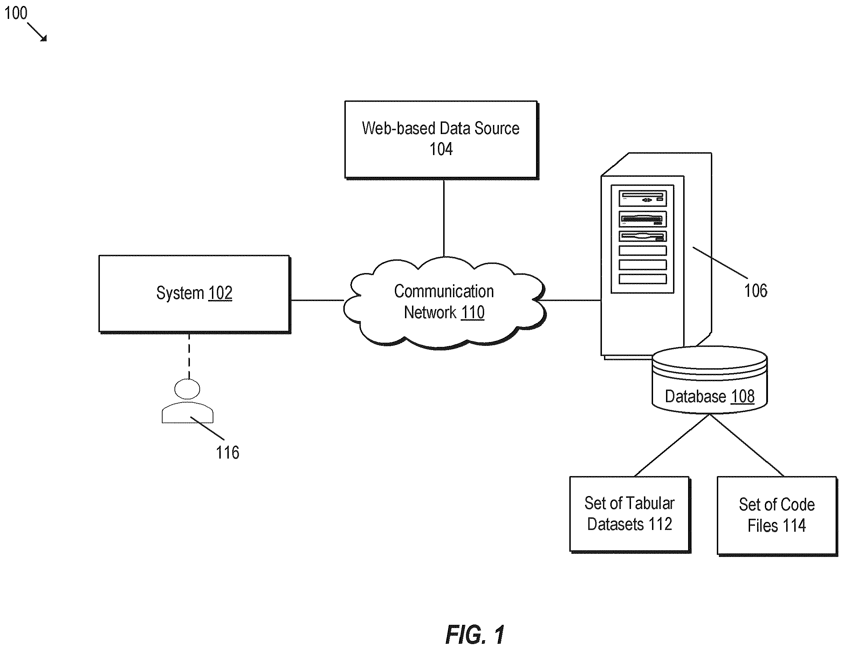

FIG. 1 is a diagram representing an example environment related to synthesizing machine learning (ML) pipelines for automated pipeline recommendations, arranged in accordance with at least one embodiment described in the present disclosure. With reference to FIG. 1, there is shown an environment 100. The environment 100 may include a system 102, a web-based data source 104, a server 106, a database 108, and a communication network 110. The system 102, the web-based data source 104, and the database 108 may be communicatively coupled to each other, via the communication network 110. The database 108 may include a set of tabular datasets 112 and a set of code files 114. In FIG. 1, there is further shown a user 116 who may be associated with (e.g., operator of) the system 102.

The system 102 may include suitable logic, circuitry, interfaces, and/or code that maybe configured to obtain a training corpus that may include a number of high performances ML pipelines. Such a corpus may be used to train a meta-model for AutoML applications such as to generate automated pipeline recommendations for input datasets. Examples of the system 102 may include, but are not limited to, a meta-learning machine, a mobile device, a desktop computer, a laptop, a computer workstation, a computing device, a mainframe machine, a server (such as a cloud server), or a group of servers. In one or more embodiments, the system 102 may include a user-end terminal device and a server communicatively coupled to the user-end terminal device. The system 102 may be implemented using hardware including a processor, a microprocessor (e.g., to perform or control performance of one or more operations), a field-programmable gate array (FPGA), or an application-specific integrated circuit (ASIC). In some other instances, the system 102 may be implemented using a combination of hardware and software.

The web-based data source 104 may be a platform for hosting web data such as datasets, discussions, code repositories, and/or executable kernels (such as code notebooks). In an embodiment, the web-based data source 104 may be a website server, a cloud storage, a web application, or a web-based service that exposes a web-API for data download. The kernels may include machine learning pipelines for the specific datasets. In some cases, the data comprising the set of tabular datasets 112 and the set of code files 114 may be received from the web-based data source 104 and stored in the database 108. In an embodiment, the set of tabular datasets 112 may include at least one dataset from a proprietary data source which may be different (unlinked) from the web-based data source 104.

The server 106 may include suitable logic, circuitry, and interfaces, and/or code that may be configured to acquire data that may include the set of tabular datasets 112 and the set of code files 114. Each of the set of code files 114 may include the computer-executable code for the ML task. Based on request(s), the acquired data may be shared with the system 102, The server 106 may execute operations through web applications, cloud applications, HTTP requests, repository operations, file transfer, and the like. Example implementations of the server 106 may include, but are not limited to, a database server, a file server, a web server, an application server, a mainframe server, or a cloud computing server.

In at least one embodiment, the server 106 may be implemented as a plurality of distributed cloud-based resources by use of several technologies that are well known to those ordinarily skilled in the art A person with ordinary skill in the art will understand that the scope of the disclosure may not be limited to the implementation of the server 106 and the system 102 as two separate entities. In certain embodiments, the functionalities of the server 106 can be incorporated in its entirety or at least partially in the system 102, without a departure from the scope of the disclosure. In certain embodiments, the server 106 may host the database 108. Alternatively, the server 106 may be separate from the database 108 and may be communicatively coupled to the database 108.

The database 108 may be configured to store the set of tabular datasets 112 and the set of code files 114. The database 108 may be derived from data off a relational or non-relational database, or a set of comma-separated values (csv) files in conventional or big-data storage. The database 108 may be stored or cached on a device, such as the server 106 or the system 102. The device storing the database 108 may be configured to receive a query for the set of tabular datasets 112 and the set of code files 114 from the system 102. In response, the device of the database 108 may be configured to retrieve and provide the queried set of tabular datasets 112 and the set of code files 114 to the system 102 based on the received query. In some embodiments, the database 108 may be hosted on a plurality of servers stored at same or different locations. The operations of the database 108 may be executed using hardware including a processor, a microprocessor (e.g., to perform or control performance of one or more operations), a field-programmable gate array (FPGA), or an application-specific integrated circuit (ASIC). In some other instances, the database 108 may be implemented using software.

The communication network 110 may include a communication medium through which the system 102 may communicate with the server 106 which may store the database 108. Examples of the communication network 110 may include, but are not limited to, the Internet, a cloud network, a Wireless Fidelity (Wi-Fi) network, a Personal Area Network (PAN), a Local Area Network (LAN), and/or a Metropolitan Area Network (MAN). Various devices in the environment 100 may be configured to connect to the communication network 110, in accordance with various wired and wireless communication protocols. Examples of such wired and wireless communication protocols may include, but are not limited to, at least one of a Transmission Control Protocol and Internet Protocol (TCP/IP), User Datagram Protocol (UDP), Hypertext Transfer Protocol (HTTP), File Transfer Protocol (FTP), ZigBee, EDGE, IEEE 802.11, light fidelity(Li-Fi), 802.16, IEEE 802.11s, IEEE 802.11g, multi-hop communication, wireless access point (AP), device to device communication, cellular communication protocols, and/or Bluetooth (BT) communication protocols, or a combination thereof.

Each dataset of the set of tabular datasets 112 may include data in a tabular format The tabular dataset may store data in rows and columns, where a row may represent an entry and a column may represent a feature associated with the data. The set of tabular datasets 112 may be in a suitable format such as csv, tsv, txt, or json in the database 108. The set of code files 114 may include codes such as, import statements for packages and ML pipelines related to the set of tabular datasets 112.

The recommendation model may be an ML model that may be trained to identify a relationship between inputs, such as features in a training dataset and output an ML pipeline recommendation. The recommendation model may be defined by its hyper-parameters, for example, number of weights, cost function, input size, number of layers, and the like. The parameters of the recommendation model may be tuned, and weights may be updated so as to move towards a global minimum of a cost function for the recommendation model. After several epochs of the training on the feature information in the training dataset, the recommendation model may be trained to generate the ML pipeline recommendation.

The recommendation model may include electronic data, which may be implemented as, for example, a software component of an application executable on the system 102. The recommendation model may rely on libraries, external scripts, or other logic/instructions for execution by a processing device. The recommendation model may include code and routines configured to enable a computing device, such as the system 102 to perform one or more operations such as, ML pipeline recommendation. Additionally, or alternatively, the recommendation model may be implemented using hardware including a processor, a microprocessor (e.g., to perform or control performance of one or more operations), a field-programmable gate array (FPGA), or an application-specific integrated circuit (ASIC). Alternatively, in some embodiments, the recommendation model may be implemented using a combination of hardware and software.

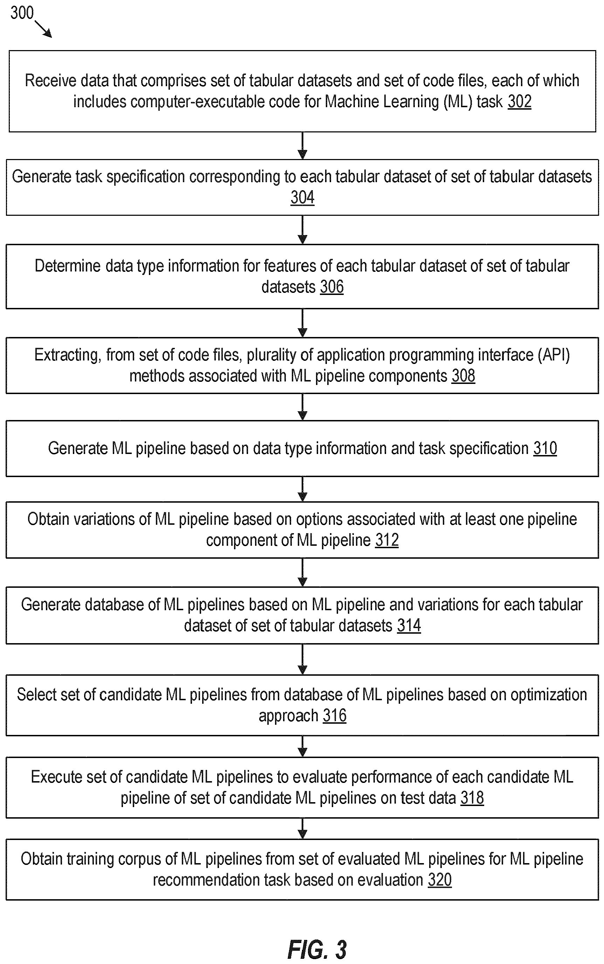

In operation, the system 102 may receive data that may include the set of tabular datasets 112 and the set of code files 114, each of which may include the computer-executable code for a particular ML task Examples of the ML task may include, but are not limited to, a classification task, a regression task, a clustering task, a generative task, or an adversarial learning task. In an example embodiment, a tabular dataset may be associated with information related to house prices and the ML task may be a task of prediction a selling price of a house. A code file associated with the tabular dataset may include functions to process the dataset and train a regression model for on the task of predicting the selling price of the house. Details related to reception of the data are further provided, for example, in FIG. 3 (at 302).

In some instances, a tabular dataset may be used by a data scientist or a researcher for different tasks. For example, an employee dataset may be used to predict attrition or to classify employees into different classes (e.g., efficient or inefficient). The tasks may depend on the features included in the dataset. It may be important to identify tasks supported by each dataset Therefore, the system 102 may generate the task specification corresponding to each tabular dataset of the set of tabular datasets 112. Details related to generation of the task specification are further provided, for example, in FIG. 3 (at 304).

The system 102 may determine the data type information for features of each tabular dataset of the set of tabular datasets 112. The data type information may specify a feature type for each column of a tabular dataset. Examples of such feature type may include, but are not limited to, a numerical feature, a categorical feature, a datetime feature, a text feature, a URL feature, a non-generalizable feature (i.e. identifier), a customized feature, or a context-specific feature. Information about the feature type may help the system 102 to decide exact pre-processing components to apply to each feature.

From the set of code files, the system 102 may extract the plurality of application programming interface (API) methods associated with ML pipeline components. For example, different preprocessing APIs and ML models used in the code files may be extracted by using static program analysis methods. Details related to the plurality of API methods are further provided, for example, in FIG. 3 (at 308). Details related to the data type information and API methods are provided, for example, in FIG. 3.

From information (such as API methods, ML models, or data type information) collected in previous steps, several ML pipelines may be generated with default options. An ML pipeline may be an ML program or an ML kernel that may usually include one or more preprocessing component(s) for a given dataset and at least one ML model for training on training features of the dataset. The preprocessing component may be applied to a subset or entirety of the training features while the ML model may be applied to all of the training features after a possible feature selection step. The default options may be based on statistical information on a pop usage of the API methods or ML models.

The system 102 may generate an ML pipeline based on the data type information and the task specification. Specifically, rule-based methods may be used on the data type information and the task specification to decide if a particular API method or an ML model may be selected as ML component of the ML pipeline for a given tabular dataset. The system 102 may explore a plurality of options associated with various pipeline components of the ML pipeline and may obtain variations of the ML pipeline based on options (of the plurality of options) associated with at least one pipeline component of the ML pipeline. Details related to the variations of the ML pipeline are further provided, for example, in FIG. 3 (at 310).

In order to create a training corpus for a training a pipeline recommendation model, a database of ML pipelines may be required. The system 102 may generate the database of ML pipelines based on the ML pipeline and the variations for each tabular dataset of the set of tabular datasets 112. Details related to the database of ML pipelines are further provided, for example, in FIG. 3.

The system 102 may select the set of candidate ML pipelines from the database of ML pipelines based on an optimization approach (e.g., a Bayesian optimization approach). Details related to the selection of the set of candidate ML pipelines are further provided, for example, in FIG. 3. After the selection, the system 102 may execute the set of candidate ML pipelines to train a ML model based on train data, and evaluate the performance of each candidate ML pipeline of the set of candidate ML pipelines on test data. Each candidate ML pipeline may be executed on the test data to get the performance score. The execution of the candidate ML pipeline may include training a model and evaluating the candidate ML pipeline. During the evaluation, the performance score of each ML pipeline may be compared with a threshold score.

The system 102 may obtain the training corpus of ML pipelines from the set of candidate ML pipelines for an ML pipeline recommendation task based on the evaluation. Details related to the evaluation of the performance and the selection of the training corpus of ML pipelines are further provided, for example, in FIG. 3.

Modifications, additions, or omissions may be made to FIG. 1 without departing from the scope of the present disclosure. For example, the environment 100 may include more or fewer elements than those illustrated and described in the present disclosure. For instance, in some embodiments, the environment 100 may include the system 102 but not the database 108. In addition, in some embodiments, the functionality of the database 108 may be incorporated into the system 102, without a deviation from the scope of the disclosure.

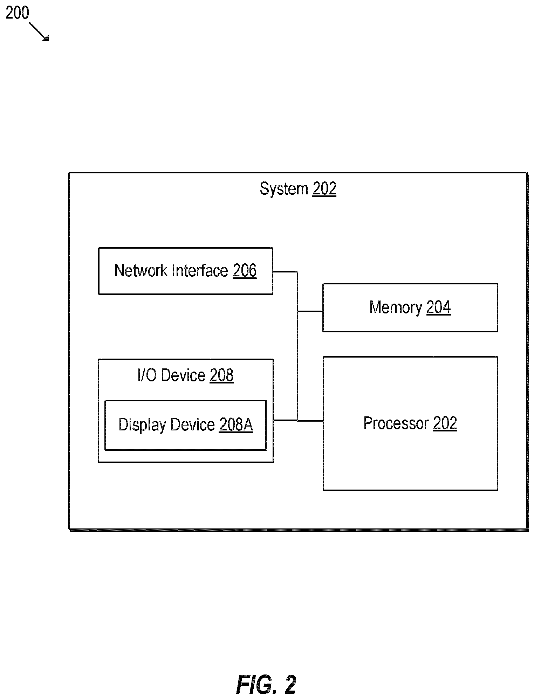

FIG. 2 is a block diagram that illustrates an exemplary system for synthesizing machine learning (ML) pipelines for automated pipeline recommendations, arranged in accordance with at least one embodiment described in the present disclosure. FIG. 2 is explained in conjunction with elements from FIG. 1. With reference to FIG. 2, there is shown a block diagram 200 of a system 102. The system 102 may include a processor 202, a memory 204, a network interface 206, an input/output (I/O) device 208, and a display device 208A.

The processor 202 may include suitable logic, circuitry, and/or interfaces that may be configured to execute program instructions associated with different operations to be executed by the system 102. The processor 202 may be configured to receive data that may comprise the set of tabular datasets 112 and the set of code files 114. Each of the set of code files 114 may include the computer-executable code for the Machine Learning (ML) task. The processor 202 may be configured to generate the task specification corresponding to each tabular dataset of the set of tabular datasets 112. The processor 202 may be configured to determine data type information for features of each tabular dataset of the set of tabular datasets 112. The processor 202 may be configured to extract, from the set of code files 114, the plurality of application programming interface (API) methods associated with ML pipeline components. The processor 202 may be configured to generate the ML pipeline based on the data type information and the task specification. The processor 202 may be configured to obtain the variations of the ML pipeline based on the options associated with at least one pipeline component of the ML pipeline. The processor 202 may be configured to generate the database of ML pipelines based on the ML pipeline and the variations for each tabular dataset of the set of tabular datasets 112. The processor 202 may be configured to select the set of candidate ML pipelines from the database of ML pipelines based on the optimization approach. The processor 202 may be configured to execute the set of candidate ML pipelines to train a ML model based on train data and evaluate the performance of each candidate ML pipeline of the set of candidate ML pipelines on test data. The processor 202 may be configured to obtain the training corpus of ML pipelines from the set of evaluated ML pipelines for the ML pipeline recommendation task based on the evaluation.

The processor 202 may include any suitable special-purpose or general-purpose computer, computing entity, or processing device including various computer hardware or software modules and may be configured to execute instructions stored on any applicable computer-readable storage media. For example, the processor 202 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in FIG. 2, the processor 202 may include any number of processors configured to, individually or collectively, perform or direct performance of any number of operations of the system 102, as described in the present disclosure. Additionally, one or more of the processors may be present on one or more different electronic devices, such as different servers. In some embodiments, the processor 202 may be configured to interpret and/or execute program instructions and/or process data stored in the memory 204. Some of the examples of the processor 202 may be a Graphics Processing Unit (GPU), a Central Processing Unit (CPU), a Reduced Instruction Set Computer (RISC) processor, an ASIC processor, a Complex Instruction Set Computer (CISC) processor, a co-processor, and/or a combination thereof.

The memory 204 may include suitable logic, circuitry, interfaces, and/or code that may be configured to store the set of tabular datasets 112 and the set of code files 114. The memory 204 may store program instructions executable by the processor 202. In certain embodiments, the memory 204 may be configured to store operating systems and associated application-specific information. The memory 204 may include computer-readable storage media for carrying or having computer-executable instructions or data structures stored thereon. Such computer-readable storage media may include any available media that may be accessed by a general-purpose or special-purpose computer, such as the processor 202. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 202 to perform a certain operation or group of operations associated with the system 102.

The network interface 206 may comprise suitable logic, circuitry, interfaces, and/or code that may be configured to establish a communication between the system 102, the server/device of the database 108, and the web-based data source 104, via the communication network 110. The network interface 206 may be implemented by use of various known technologies to support wired or wireless communication of the system 102, via the communication network 110. The network interface 206 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, and/or a local buffer.

The I/O device 208 may include suitable logic, circuitry, interfaces, and/or code that may be configured to receive a user input. For example, the I/O device 208 may receive a first user input corresponding to a request for data that may comprise the set of tabular datasets 112 and the set of code files 114. The I/O device 208 may include various input and output devices, which may be configured to communicate with the processor 202 and other components, such as the network interface 206. Examples of the input devices may include, but are not limited to, a touch screen, a keyboard, a mouse, a joystick, and/or a microphone. Examples of the output devices may include, but are not limited to, a display (e.g., the display device 208A) and a speaker.

The display device 208A may comprise suitable logic, circuitry, interfaces, and/or code that may be configured to display the automated pipeline recommendations. The display device 208A may be configured to receive the user inputs (e.g., the first user input) from the user 116. In such cases the display device 208A may be a touch screen to receive the user inputs. The display device 208A may be realized through several known technologies such as, but not limited to, a Liquid Crystal Display (LCD) display, a Light Emitting Diode (LED) display, a plasma display, and/or an Organic LED (OLED) display technology, and/or other display technologies.

Modifications, additions, or omissions may be made to the example system 102 without departing from the scope of the present disclosure. For example, in some embodiments, the example system 102 may include any number of other components that may not be explicitly illustrated or described for the sake of brevity.

FIG. 3 is a diagram that illustrates a flowchart of an example method for synthesizing machine learning (ML) pipelines for automated pipeline recommendations, in accordance with an embodiment of the disclosure. FIG. 3 is described in conjunction with elements from FIG. 1 and FIG. 2. With reference to FIG. 3, there is shown a flowchart 300. The method illustrated in the flowchart 300 may start at 302 and may be performed by any suitable system, apparatus, or device, such as, by the example system 102 of FIG. 1, or the processor 202 of FIG. 2.

Although illustrated with discrete blocks, the steps and operations associated with one or more of the blocks of the flowchart 300 may be divided into additional blocks, combined into fewer blocks, or eliminated, depending on the particular implementation.

At block 302, data that includes the set of tabular datasets 112 and the set of code files 114 may be received. Each of the set of code files 114 may include a computer-executable code for an ML task. Examples of the ML task may include, but are not limited to, the classification task, the regression task, the clustering task, the generative task, or the adversarial learning task. In an embodiment, the processor 202 may be configured to receive data that may include the set of tabular datasets 112 and the set of code files 114. The set of tabular datasets 112 may include one of or both of synthetic tabular datasets and real-world tabular datasets. Each dataset may be in a raw form or may be in a format such as csv, tsv, txt, or json. In accordance with an embodiment, the set of tabular datasets 112 may be received from the web-based data source 104. License, terms, and conditions associated with the set of tabular datasets 112 may be verified to ensure that a commercial use of each tabular dataset of the set of tabular datasets 112 is allowed. A subset of the set of tabular datasets 112 may be removed as the licenses associated with the subset may not allow a commercial use of the subset.

At block 304, a task specification corresponding to each tabular dataset of the set of tabular datasets 112 may be generated. In an embodiment, the processor 202 may be configured to generate the task specification corresponding to each tabular dataset

In an embodiment, the task specification for each tabular dataset of the set of tabular datasets 112 may include a type of the ML task that may be possible to perform using a corresponding tabular dataset and one or more target features of the corresponding tabular dataset that may be required for the type of the ML task. The task specification may be a task type, such as a classification task, a regression task, a clustering task, or a generative task that may be performed on the corresponding tabular dataset The target features may be target columns (to be predicted) of a corresponding tabular dataset As an example, a tabular dataset of the set of tabular datasets 112 may be associated with a house price prediction problem. The tabular dataset may include features, such as a lot area, a condition of the house, a year of construction of the house, a pool area, and a selling price of the house. The task specification may specify the task type as a regression task for house price prediction and the target feature may be the selling price of a house. In some cases, the task specification for a tabular dataset may have multiple task types depending on a choice of the user 116 or target features.

In an embodiment, the data (received at 302) may include the data type of features associated with at least a subset of the set of tabular datasets 112. The data type may be generated based on application of multiple AutoML tools such as "SapientML", and "Mljar-supervised^{®}" on a tabular dataset of the set of tabular datasets 112. Each AutoML tool may generate information associated with a set of data types. Alternatively, the data types may be generated based on a pre-trained ML model such as "SortingHat" that is specially designed to predict the data type of features in a tabular dataset of the set of tabular datasets 112. A specific set of data types may be selected for the tabular dataset based on a voting mechanism.

In some cases, the task specification associated with each tabular dataset of the set of tabular datasets 112 may be unavailable. In such cases, the task specification for each tabular dataset of the set of tabular datasets 112 may be generated by selecting one or more code files associated with the tabular dataset and performing a static program analysis of such code files to extract the type(s) of the ML task that can be performed using the dataset and one or more target features in the dataset It may be assumed that metadata and one or more code files associated with each tabular dataset is available on a web-based data source, such as the web-based data source 104. Thereafter, the terms and conditions associated with each tabular dataset of the set of tabular datasets 112 may be verified to filter out the tabular datasets that may not be used for the commercial purposes. The filtered set of tabular datasets may be referred to as the set of tabular datasets 112.

The task specification for each tabular dataset of the set of tabular datasets 112 may be determined based on an application of a static program analysis method on the one or more code files associated with the corresponding tabular dataset In accordance with an embodiment, the one or more code files associated with the corresponding tabular dataset may be parsed to extract abstract syntax tree (AST) information based on the static program analysis method. Thereafter, crucial function calls and arguments inside the crucial function call may be identified from the one or more code files using the AST. For example, the crucial function call may be "Model.fit(X, y)" to train the ML model. The argument "y" may be used to extract the type of the ML task and determine a target feature. Moreover, a class name of the ML model used in the one or more code files may be used decide whether the ML model is for a classification or regression task. An example, of a mapping of the ML model to the type of the ML task for each tabular dataset of the set of tabular datasets 112 is presented in Table 1, as follows:

**Table 1: Exemplary mapping of the ML model to the type of the ML task From Table 1, it may be observed that the type of the ML task for may be classification or regression. For example, if the ML model is "RandomForestClassifier" then the type of the ML task may be classification. It should be noted that data provided in Table 1 may merely be taken as an example and may not be construed as limiting the present disclosure. Thereafter, the task specification associated with the corresponding tabular dataset may be generated.**

| Classification | Regression |
|---|---|
| RandomForestClassifier | RandomForestRegressor |
| ExtraTreesClassifier | ExtraTrees Regressor |
| LGBMClassifier | LGBMRegressor |
| LogisticRegression | LinearRegression |
| GaussianNB | - |

At block 306, the data type information for features of each tabular dataset of the set of tabular datasets 112 may be determined. In an embodiment, the processor 202 may be configured to determine the data type information for features of each tabular dataset The data type information may specify a feature type for each feature of a tabular dataset As an example, the feature type may include a numerical type, a categorical type, a datetime type, a text type, a uniform resource locator (URL) type, an identifier type, a customized type, a context-specific type, and the like. The feature type may be determined to decide a pre-processing component that may be applied to the corresponding feature during a pre-processing stage of an ML pipeline. In an example, the feature type may be determined based on application of multiple AutoML tools such as "SapientML", and "Mljar-supervised^{®}" on a tabular dataset of the set of tabular datasets 112. Alternatively, the data types of features may be determined based on a pre-trained ML model such as "SortingHat" to predict the data type of features on a tabular dataset of the set of tabular datasets 112. Tools such as "SapeintML" and "Mljar-supervised^{®}" may follow a rule-based approach and "SortingHat" may follow a supervised learning method. Feature type inferred from "SapientML" and "Mljar-supervised^{®}" may be mapped to the feature type inferred from "SortingHat". In some instances, a classification inferred from "Sortinghat" may be considered as a basis for determining the feature type. An example of the mapping of the feature type inferred from the "SortingHat", the "SapientML", and the "Mljar-supervised^{®}" for each tabular dataset of the set of tabular datasets 112 is presented in Table 2, as follows:

**Table 2: Exemplary mapping of inferred feature types**

| Index | SortingHat | SapientML | Mljar-supervised^{®} |
|---|---|---|---|
| 1 | Numerical | str_num | continuous discrete |
| | | num_cont | |
| | | num_catg | |
| 2 | Categorical | str_catg | categorical |
| | | str_catg_binary | |
| 3 | Datetime | str_date | datetime |

Data provided in Table 2 is merely an example and should not be construed as limiting the present disclosure.

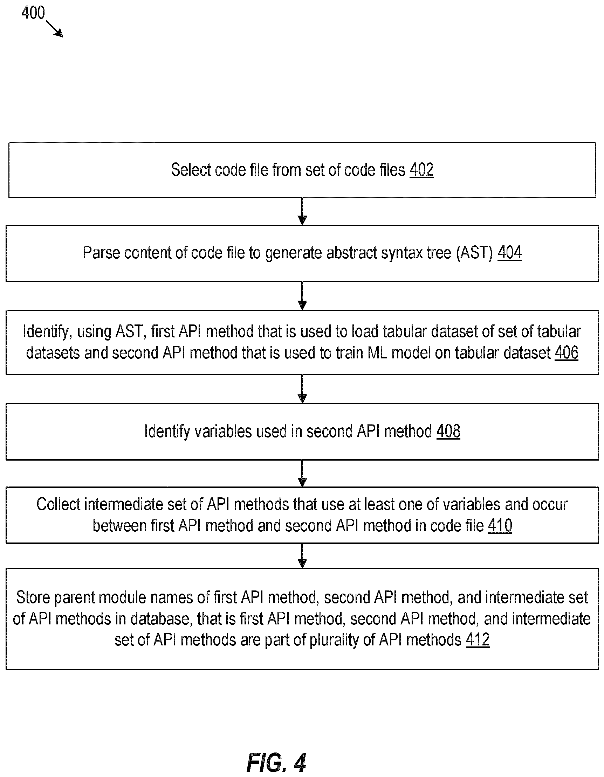

At block 308, the plurality of application programming interface (API) methods associated with the ML pipeline components may be extracted from the set of code files. In an embodiment, the processor 202 may be configured to extract the plurality of API methods associated with the ML pipeline components from the set of code files. Static program analysis methods may be used to extract the plurality of API methods used in ML pipelines components of the set of code files. Details related to the extraction of API methods are further provided, for example, in FIG. 4.

In an embodiment, the ML pipeline components may include a data pre-processing component, a feature selection component, a feature engineering component, a model selection component, and a model training component. Each code file of the set of code files may be usually composed of zero or one or multiple preprocessing component(s) such as, the data pre-processing component and one ML model component. A given data preprocessing component may be applied to a subset or entire features of the corresponding tabular dataset while the ML model may be applied to the entire features.

The data pre-processing component may be used to pre-process the tabular dataset of the set of tabular datasets 112. The data pre-processing component may include, for example, a missing values handling component, a data imbalance component, and a feature scaling component, a feature encoding component, and the like. For example, missing values of a column "BsmtQual" corresponding to a height of a basement may be handled using a missing values handling component "sklearn.impute.SimpleImputer". In another example, missing values of a column "GarageArea" corresponding to a size of a garage in square feet may be handled using a missing values handling component "pandas.DataFrame.fillna". Data imbalance in the tabular dataset may be handled using the data imbalance component, such as, "imblearn.under_sampling", "imblearn.over_sampling.SMOTENC", and the like. Features of the tabular dataset may be scaled using the scaling component, such as "sklearn.preprocessing.StandardScaler", "sklearn.preprocessing.MinMaxScaler", and the like. Features of the tabular dataset may be encoded using the encoding components, such as "sklearn.preprocessing.LabelEncoder" or "sklearn.preprocessing.OneHotEncoder". The feature selection component may select a subset of features from a set of features associated with a tabular dataset of the set of tabular datasets 112. Example, of the feature selection component may include "pandas.DataFrame.drop", "sklearn.feature_selection.RFE", and the like. The feature engineering component may extract features from the corresponding tabular dataset. For example, the feature engineering component may include "patsy.dmatrices", "sklearn.cluster.KMeans", and the like. The model selection component may select the ML model, such as a regression model for the corresponding tabular dataset. For example, a model selection and evaluation component may include "sklearn.model_selection.learning curve", "sklearn.model_selection.cross val_predict", and the like. The model training component may be used to train the selected ML model. The ML pipeline components may also include a feature extraction component, such as "pandas.to_datetime", "sklearn.feature_extraction.text.TfidfVectorizer", and the like. The ML pipeline components may further include a category encoder component, such as "pandas.get_dummies", "sklearn.preprocessing.LabelEncoder", and the like.

At block 310, an ML pipeline may be generated based on the data type information and the task specification. In an embodiment, the processor 202 may be configured to generate the ML pipeline based on the data type information and the task specification.

Based on the extracted plurality of API methods associated with ML pipeline components and/or or references of implementation of other AutoML libraries, a default option for the API and ML algorithm may be decided. As an example, "rule-based" method, "sklearn" pipeline, and "ColumnTransformer" may be used to create the ML pipeline automatically. A rule regarding whether to apply an API method such as the data preprocessing component to a particular feature may be based on the feature type and/or certain conditions that may appear as values for the feature type. For instance, a numerical missing value handling component may be applied to a feature in case the feature type associated with the corresponding feature is the numerical type and some values in a column associated with the corresponding feature may be missing. Same set of API methods may be applied to a set of columns with the same feature type or conditions.

Initially, the ML pipeline may be synthesized with default options based on the feature type having a majority voting when determined using the "SortingHat", the "SapientML", and the "Mljar-supervised^{®}". Thereafter, all possible feature types inferred by each of the three tools may be evaluated since each of the tools for determining feature type namely, the "SortingHat", the "SapientML", and the "Mljar-supervised^{®}" may generate different feature types. The feature type that results in creation of the ML pipeline having a best performance (i.e., above a threshold) may be used in follow-up explorations.

In addition to applying default option of preprocessing components and ML algorithm, an order of the API methods may be determined. It should be noted that a total possible number of ML pipelines may be large due to number of permutations or combinations of the API methods that can be includes in an ML pipeline for a given dataset Therefore, the number of feasible preprocessing orders may be limited. As an example, the order of the API methods may be a missing value handling component, a feature extraction component, a category encoder component, a target column splitting component, a data imbalance component, a feature engineering component, a scaling component, and a feature selection component As another example, the order of the API methods may be the missing value handling component, a first feature extraction component, the category encoder component, a first scaling component, a target column splitting component, a second feature extraction component, a second scaling component, the feature engineering component, a data imbalance component, and a feature selection component. As another example, the order of the API methods may be a feature type inference, a drop ID columns component, a data cleaning component, a missing value handling component, a feature extraction component (to extract the features of datetime type, the text type, or the URL type), a category encoding component, a numerical feature scaling component, a customized feature engineering component, a feature selection component, a data imbalance component, a target transformation component, and an ML model component It should be noted that the order of the API methods may not cause a major impact on executability and performance of the generated ML pipeline.

At block 312, variations of the ML pipeline may be obtained based on options associated with at least one pipeline component of the ML pipeline. In an embodiment, the processor 202 may be configured to obtain the variations of the ML pipeline.

In an embodiment, each of the options may correspond to an optional parameter that may be acceptable to an API method of the plurality of API methods, an algorithm that may be acceptable to the API method, a choice to skip the API method for the generation of the ML pipeline, or a choice for an ML model for the ML pipeline. The optional parameter in a selected pipeline component may change while the rest of pipeline components and the ML model remains unaltered and includes default options. For example, optional parameters for an API method "sklearn.preprocessing.Imputer" may be a missing value, a strategy, an axis, and a verbose. A first ML pipeline may be obtained by taking default values of the missing value, the strategy, the axis, and the verbose. For instance, the default strategy may be "mean". A second ML pipeline may be obtained by customizing the strategy with "median". The missing values in a column may be replaced by the median. Additionally, or alternatively, the variations of the ML pipeline may be obtained based on variations in the algorithm that may be acceptable to the API method. Explorations of the API method may be extended based on extension of various algorithms that may be used in a particular API method. For example, a numerical feature scaling API method may use "StandardScale" or "loglp".

The variations of the ML pipeline may be also obtained based on the choice to skip the API method for the generation of the ML pipeline. As an example, a first ML pipeline may be obtained based on an inclusion of the API method for dropping identifier (ID) columns. A second ML pipeline may be obtained based on a removal of the API method for dropping the identifier (ID) columns. The variations of the ML pipeline may be also obtained based on a choice for the ML model. For example, a first ML pipeline may be obtained by selecting "RandomForestClassifier" as the ML model. A second ML pipeline may be obtained by selecting "ExtraTreesClassifier" as the ML model. The selection may be based on performance scores for individual ML models. An example of performance scores of the ML pipelines generated based on the explorations of the API methods is presented in Table 3, as follows:

**Table 3: Exemplary performance scores of the ML pipelines**

| Index | Hash | Log | Model | Score |
|---|---|---|---|---|
| 1 | f63976feeebfe8a0... | 309,0_0, d_[],9_2_ [01 11111] | RandomForestClassifier | 0.617117 |
| 2 | 09c3997cefa40e... | 309,0_0, d_[],9_2_ [0 1 11111] | ExtraTreesClassifier | 0.620370 |

From Table 3, it may be observed that the first ML pipeline is generated based on a selection of "RandomForestClassifier" as the ML model and a second ML pipeline may be generated based on a selection of "ExtraTreesClassifier" as the ML model. Since the performance score associated with the second ML pipeline is higher than the performance score associated with the first ML pipeline, the second ML pipeline may be retained. That is, the "ExtraTreesClassifier" may be used as the ML model. It should be noted that data provided in Table 3 is merely an example and should not be construed as limiting the present disclosure.

At block 314, a database of ML pipelines may be generated based on the ML pipeline and the variations for each tabular dataset of the set of tabular datasets 112. In an embodiment, the processor 202 may be configured to generate the database of ML pipelines based on the ML pipeline and the variations for each tabular dataset of the set of tabular datasets. Each entity in the database of ML pipelines may include a tuple "(X, y)", where "X" may be a set of training features and "y" may be a target such as a performance score of the corresponding ML pipeline. An example of the training features is provided in Table 4. In an embodiment, the database of ML pipelines may include statistical features associated with the set of tabular datasets 112, learning-based meta features associated with the set of tabular datasets, or hybrid meta-features associated with the set of tabular datasets.

In an example embodiment, the pipeline components of the ML pipeline may include a missing number component that may have two options, a missing category component that may have two options, a datetime component that may have two options, a text component that may have three options, a URL component that may have two options, a category encoder component that may have three options, a scaling component that may have four options, a principal component analysis (PCA) component that may have three options, a feature select component that may have two options, an imbalance component that may have three options, and a transformed target component that may have three options. The total possible combination in various options of the pipeline components may be a multiplication of two, three, two, three, two, three, four, three, two, three, and three that may result to "46,656", for example. In case a number of choices for an ML model of the ML pipeline includes "17" classification models or "15" regression model, then then total possible combination of the ML pipeline based on explorations of the pipeline component and the ML model may be about "750,000". Thus, the set of pipelines that may generated may include "750,000" variations. Similarly, the variations in the ML pipeline for each tabular dataset of the set of tabular datasets 112 may be explored to generate the database of ML pipelines. It should be noted that an exact number of explorations may depend on the feature type and conditions appeared in the features of the corresponding tabular dataset. An example, of the database of ML pipelines is presented in Table 4, as follows:

**Table 4: Exemplary portion of a database of ML pipelines**

| m | dcn | dcc | mn | mc | dt | text | URL | ce | ns | fe | pea |
|---|---|---|---|---|---|---|---|---|---|---|---|
| 0 | 0 | 0 | 0 | 0 | 0 | 0 | 1 | 1 | 0 | 0 | 0 |
| 1 | 0 | 0 | 2 | 0 | 0 | 0 | 1 | 1 | 3 | 0 | 0 |
| 2 | 0 | 0 | 0 | 0 | 0 | 0 | 1 | 2 | 2 | 0 | 0 |
| 3 | 0 | 0 | 0 | 0 | 0 | 0 | 1 | 1 | 0 | 0 | 0 |
| 4 | 0 | 0 | 0 | 0 | 0 | 0 | 1 | 1 | 0 | 0 | 0 |

In Table 4, "m" may represent the ML model used in the ML pipeline, a "1" in the "den" column may represent an application of the data cleaning component on a feature that may be of the numerical type in the ML pipeline, a "1" in the "dec" column may represent an application of the data cleaning component on a feature of the categorical type in the ML pipeline, a "2" in the "mn" column may represent an application of option "2" of the missing number component on a feature of the numerical type in the ML pipeline, a "1" in the "me" column may represent an application of option "1" of a missing category component in the ML pipeline, a "1" in the "dt" column may represent an inclusion of an application of option "1" of feature extraction on the feature of a datetime type in the ML pipeline, a "2" in the "text" column may represent an inclusion of an application of option "2" of feature extraction on the feature of a text type in the ML pipeline, a "1" in the "URL" column may represent an inclusion of an application of option "1" of feature extraction on the feature of a URL type in the ML pipeline, a "2" in the "ce" column may represent an inclusion of option "2" of the category encoder component in the ML pipeline, a "3" in the "ns" column may represent an inclusion of option "3" of the numerical scaling component in the ML pipeline, a "1" in the "fe" column may represent an inclusion of option "1" of the feature engineering component in the ML pipeline, and a "1" in the "pca" column may represent inclusion of option "1" of a principal component analysis module in the ML pipeline. A "0" may in a column may represent exclusion of a feature associated with the corresponding column in the ML pipeline. For example, a "0" in the "fe" column may represent an exclusion of the feature engineering component in the ML pipeline. Each row of the Table 4 may represent one ML pipeline. In other word, an executable ML pipeline may be reconstructed from the information recorded in each row. Each column may represent an option used in the variation of the ML pipeline. It should be noted that data provided in Table 4 is merely an example and should not be construed as limiting the present disclosure.

At block 316, a set of candidate ML pipelines may be selected from the database of ML pipelines based on an optimization approach. In an embodiment, the processor 202 may be configured to select the set of candidate ML pipelines from the database of ML pipelines. The set of candidate ML pipelines may consist of ML pipelines having predicted performance scores (from a proxy model) above a score threshold.

It may not always be feasible to have an exhaustive search in order to find best performing ML pipelines (i.e., ML pipelines with scores above the threshold), especially with a large set of candidate pipelines (i.e., a large search space). Thus, a goal for creating a training corpus of ML pipelines for pipeline recommendations is not to find top-1 ML pipeline but is to collect "good" ML pipelines that may have acceptable performance scores. To achieve the goal, an optimization approach may be used to iteratively select the set of candidate ML pipelines from the database of ML pipelines and evaluate the performance of such selections on test data.

In an embodiment, the optimization approach may use a Bayesian Optimization (BO) approach. The BO approach is a sequential design strategy for global optimization of black-box functions to find an optimal solution. The BO approach of the present disclosure may select multiple candidate ML pipelines for a next round of exploration in order to obtain the set of candidate ML pipelines from the database of ML pipelines. For a given targeted search space, each option for each preprocessing component may be iteratively enumerated to compose one candidate ML pipeline. The targeted search space may be provided as an input. For instance, instead of searching for all possible ML pipelines, the selection of the candidate ML pipelines may be limited to a top "k" number of candidate ML pipelines among all ML pipelines explored previously. Synthesizing the set of candidate ML pipelines even in an entire comprehensive search space may not take considerable amount of time and may be tractable to generate all of the set of candidate ML pipelines.

The preprocessing components from the ML pipelines may be applied to a group of the features with the same feature type or condition. In an embodiment, different options of a preprocessing component may be applied to different features even though the different features may have a same feature type or a condition. For instance, a numerical scaling component with an option "(StandardScaler(with_mean=True))" may not be useful to every numerical type features. Mixture of different options or without scaling may lead to better performance. On the other hand, total possible combinations may make it impossible to conduct comprehensive search. Therefore, Bayesian Optimization approach may be used to search possible good candidates having higher performance.

In an embodiment, the processor 202 may be configured to train a posterior distribution model on records of the database of ML pipelines. The processor 202 may be configured use the optimization approach with the trained posterior distribution model to select the set of candidate ML pipelines from the database of ML pipelines. The posterior distribution model may be a simplified, that is, a computationally efficient model that may estimate a relationship between the set of training features "X" and the target "y" (such as a performance score). As an example, the posterior distribution model may be a "GaussianProcessRegressor" model. Both training and inference of such a model may be much faster than evaluation of actual ML pipelines.

In an embodiment, the processor 202 may be configured to train a plurality of posterior distribution models on records of the database of ML pipelines. The set of candidate ML pipelines may be selected using the trained plurality of posterior distribution models.

Each posterior distribution model of the plurality of posterior distribution models may be trained on features of a tabular dataset of the set of tabular datasets. The plurality of posterior distribution models may be trained to be used for a flat model of selection of the set of candidate ML pipelines. Herein, a posterior distribution model may be built for each dataset. Therefore, the inputs to a flat structure of models may be different for different datasets. As an example, the inputs to a flat structure of models may include both dataset meta-features and ML pipeline meta-features. The dataset meta-feature may include dataset level features and column level features. The pipeline meta-features may include column-level of ML components. That is, the set of options of preprocessing and ML model components applied to each individual column may be grouped as the pipeline meta-features.

Alternatively, the plurality of posterior distribution models may be trained to be used for a hierarchical model of selection of the set of candidate ML pipelines. A structure of hierarchal model may include two layers. A top layer of ML models may be associated with ML components. Each ML model in the top layer may be a classifier model that may recommend an option of one ML component. Each ML model of the top layer may be provided with an input. The input may be a dataset, meta-features associated with the dataset, a column-level dataset, meta-features of a column, an option of a ML component that may be applied to the corresponding column as the training feature "Xt", or an average of performance score of the evaluated ML pipelines that may utilize the option of the ML component as a target "yt". Outputs of the ML models of the top layer may be the possible options of the ML component applied to the corresponding column. The outputs of the ML models of the top layer may be combined as an input to a next stage. That is, one candidate ML pipeline may be composed of the various options of ML components that may be applied to different columns. A likelihood of each candidate pipeline may be computed as a multiplication of probabilities of the ML models of the top layer. The set of candidate ML pipelines may be sorted based on the likelihood. The candidate ML pipeline with a higher likelihood may be evaluated first.

In an embodiment, the selection of the set of candidate ML pipelines from the database of ML pipelines may be performed iteratively based on an ML metadata model or an optimization search model (e.g. Bayesian Optimization). The optimization search model may select a top "N" number of the candidate ML pipelines from the variations of the ML pipeline based on a first option associated with at least one pipeline component of the ML pipeline. Thereafter, the optimization search model may select top "N" number of the candidate ML pipelines from the variations of the ML pipeline based on a second option associated with at least one pipeline component of the ML pipeline. Thus, the optimization search model may select the top candidate ML pipelines available at a moment. The optimization search model may thus select the set of candidate ML pipelines from the database of ML pipelines in a top-down approach.

At block 318, the set of candidate ML pipelines may be executed to train a ML model based on training data and evaluate a performance of each candidate ML pipeline of the set of candidate ML pipelines may be evaluated on the test data. In an embodiment, the processor 202 may be configured to execute the set of candidate ML pipelines to train a ML model based on training data and evaluate the performance of each candidate ML pipeline.

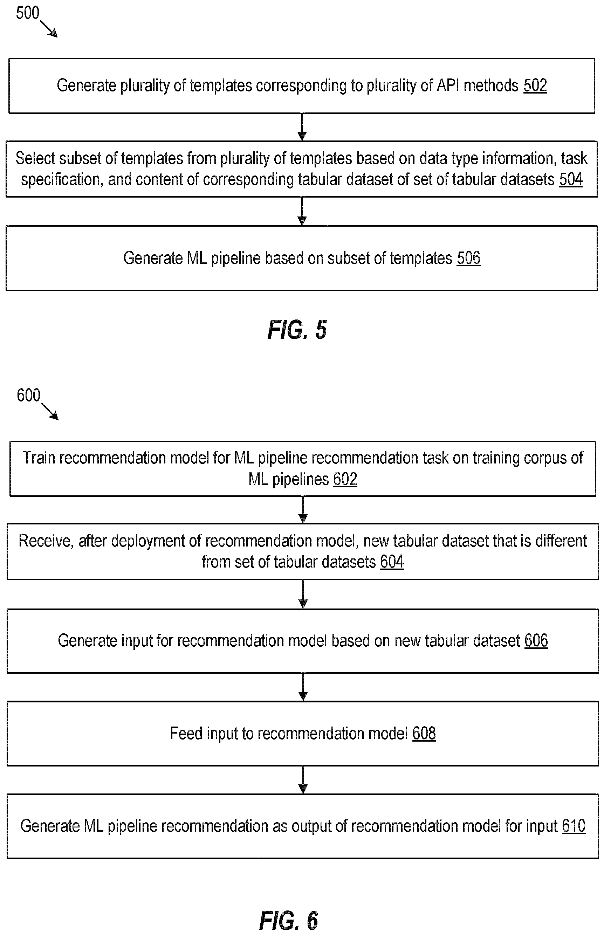

In an embodiment, a plurality of templates corresponding to the plurality of API methods may be generated. The set of candidate ML pipelines may be generated based on the generated plurality of templates. Details related to the plurality of templates are further provided, for example, in FIG. 5.

Once the set of candidate ML pipelines are generated, each candidate ML pipeline "Xₙ₊₁" may be executed based on the input tabular dataset. The input dataset may be divided into train data and test data. Train data may be used to train a ML model based on the ML pipeline while test data may be used to evaluate the performance score "yₙ₊₁". The execution of the candidate ML pipeline "Xₙ₊₁" may include training a model and evaluating the candidate ML pipeline. In some embodiments, parallel processing may be used to execute multiple candidate ML pipelines at the same time in order to shorten an overall time for the evaluation.

At block 320, a training corpus may be obtained of ML pipelines. In an embodiment, the processor 202 may be configured to obtain the training corpus of ML pipelines from the set of candidate ML pipelines for an ML pipeline recommendation task based on the evaluation. The process of execution of a candidate ML pipeline to evaluate the performance of the candidate ML pipeline may be continued till a terminate condition is met The terminate condition may be reaching a threshold score for synthesized pipelines. Alternatively, the terminate condition may be a total number or percentage of original candidates that must be evaluated from the set of candidate ML pipelines. Alternatively, the terminate condition may be a performance gain of the set of candidate ML pipelines. If the condition is unmet, the pairs of (X_{n+1,}yₙ₊₁) may be incorporated in the training corpus of ML pipelines.

In an embodiment, the training corpus of ML pipelines may include at least a subset of the set of evaluated ML pipelines. The training corpus may be obtained based on a determination that the performance for each pipeline of the subset is above a threshold performance. For example, the set of evaluated ML pipelines may include "A" number of evaluated ML pipelines. The subset of the set of evaluated ML pipelines that may include "B" number of evaluated ML pipelines may be included in the training corpus of ML pipelines. The performance of each candidate ML pipeline of the "B" number of evaluated ML pipelines may be greater than the threshold performance, for example, "0.8".

Although the flowchart 300 is illustrated as discrete operations, such as 302, 304, 306, 308, 310, 312, 314, 316, 318, and 320. However, in certain embodiments, such discrete operations maybe further divided into additional operations, combined into fewer operations, or eliminated, depending on the particular implementation without detracting from the essence of the disclosed embodiments.

FIG. 4 is a diagram that illustrates a flowchart of an example method for extracting a plurality of application programming interface (API) methods associated with ML pipeline components, in accordance with an embodiment of the disclosure. FIG. 4 is described in conjunction with elements from FIG. 1, FIG. 2, and FIG. 3. With reference to FIG. 4, there is shown a flowchart 400. The method illustrated in the flowchart 400 may start at 402 and may be performed by any suitable system, apparatus, or device, such as, by the example system 102 of FIG. 1, or the processor 202 of FIG. 2. Although illustrated with discrete blocks, the steps and operations associated with one or more of the blocks of the flowchart 400 may be divided into additional blocks, combined into fewer blocks, or eliminated, depending on the particular implementation.

At block 402, a code file from the set of code files may be selected. In an embodiment, the processor 202 may be configured to select the code file from the set of code files.

At block 404, content of the code file may be parsed to generate an abstract syntax tree (AST). In an embodiment, the processor 202 may be configured to parse content of the code file to generate the AST. The parser may be a program that may be a part of a compiler and may be used for analysis of the code file. The parsing of code file may be used to generate the AST. The AST may include nodes in a form of a tree. Each node may be associated with a "construct" of the code file such that the generated AST may provide information related to a structure of the code file.

At block 406, a first API method that may be used to load a tabular dataset of the set of tabular datasets 112 and a second API method that may be used to train an ML model on the tabular dataset may be identified using the AST. In an embodiment, the processor 202 may be configured to identify, using the AST, the first API method that may be used to load the tabular dataset of the set of tabular datasets 112 and the second API method that may be used to train the ML model on the tabular dataset Static program analysis methods may be applied to extract the first API method (for example, "pandas.read_csv()" that may load the tabular dataset) and the second API method (for example, "model.fitQ" that may train the ML model).

At block 408, variables used in the second API method may be identified. In an embodiment, the processor 202 may be configured to identify the variables used in the second API method. As an example, the second API method may be model.fit(X, y). The arguments used inside the model.fit() function call may be "X" and "y". Thus, variables used in the second API method may be identified as "X" that may be a variable of training data frame and "y" that may be a "prediction target".

At block 410, an intermediate set of API methods that use at least one of the variables and occur between the first API method and the second API method in the code file may be collected. In an embodiment, the processor 202 may be configured to collect the intermediate set of API methods from the code file, for example, by back tracing from the second API method to the first API method to record the intermediate set of API methods where either "X" or "y" may be involved.

At block 412, parent module names of the first API method, the second API method, and the intermediate set of API methods may be stored in a database such as the database 108. The first API method, the second API method, and the intermediate set of API methods may be a part of the plurality of API methods. In an embodiment, the processor 202 may be configured to store parent module names of the first API method, the second API method, and the intermediate set of API methods in the database 108. A parent module may be a module that may call another module, for example, a child module. The parent module name and a complete path of the first API method, the second API method, and the intermediate set of API methods may be retrieved and stored in the database 108.

Although the flowchart 400 is illustrated as discrete operations, such as 402, 404, 406, 408, 410, and 412. However, in certain embodiments, such discrete operations may be further divided into additional operations, combined into fewer operations, or eliminated, depending on the particular implementation without detracting from the essence of the disclosed embodiments.

FIG. 5 is a diagram that illustrates a flowchart of an example method for generation of a ML pipeline based on a subset of templates, in accordance with an embodiment of the disclosure. FIG. 5 is described in conjunction with elements from FIG. 1, FIG. 2, FIG. 3, and FIG. 4. With reference to FIG. 5, there is shown a flowchart 500. The method illustrated in the flowchart 500 may start at 502 and may be performed by any suitable system, apparatus, or device, such as, by the example system 102 of FIG. 1, or the processor 202 of FIG. 2. Although illustrated with discrete blocks, the steps and operations associated with one or more of the blocks of the flowchart 500 may be divided into additional blocks, combined into fewer blocks, or eliminated, depending on the particular implementation.

At block 502, a plurality of templates corresponding to the plurality of API methods may be generated. In an embodiment, the processor 202 may be configured to generate the plurality of templates corresponding to the plurality of API methods. A template corresponding to a given API method may be a function call with a given input of features to be applied. The template may provide a wrapping function around the given API method or a customized class module. In an embodiment, each template of the plurality of templates may be an API call object with one or more features selected from the corresponding tabular dataset as an input for the API call object

Many programming languages have ML libraries or ML packages to support development of ML pipeline components through an object oriented approach. For example, a programming platform such as Python provides a library such as "scikit-learn" that includes a number of ML pipeline components. The plurality of templates may be composed using the existing ML library. The library may provide a pipeline function and a column transformer function that may be used for creation of templates. By using the API method associated with the pipeline function and the API method associated with the column transformer function, a template of the subset of templates may be represented via a tuple of "(template_name, library API)" when a library API is used or a tuple of "(template_name, customized class name)" when a customized class is implemented. The "template_name" may represent a name of the corresponding template.

At block 504, a subset of templates may be selected from the plurality of templates based on the data type information, the task specification, and content of a corresponding tabular dataset of the set of tabular datasets 112. In an embodiment, the processor 202 may be configured to select the subset of templates from the plurality of templates. As discussed, the data type information may be the feature type for each feature of the corresponding tabular dataset. The task specification for a given tabular dataset may include types of the ML task that may be possible to perform using the given tabular dataset and one or more target features of the corresponding tabular dataset that may be required for the types of the ML task. As an example, a given tabular dataset may be associated with a house price prediction problem. The tabular dataset may include features, such as a lot area, a condition of the house, a year of construction of the house, a house number, and a selling price of the house. The feature type for the lot area, the condition of the house, the year of construction of the house, the house number, and the selling price of the house may be the numerical type, the categorical type, the datetime type, the identifier type, and the numerical type, respectively. The task specification may specify the ML task as a house price prediction task and the target feature may be the selling price of the house. The plurality of templates that may be selected for the aforesaid example, may include a template corresponding to an API method for data cleaning, a template corresponding to an API method for category cleaning, a template corresponding to an API method for handling missing numbers, and the like.

Atblock 506, the ML pipeline may be generated based on the subset of templates. In an embodiment, the processor 202 may be configured to generate the ML pipeline based on the subset of templates. As an example, a programming library such as "scikit-learn" may provide a pipeline function and a column transformer function to generate the ML pipeline. The programming library may assemble the subset of templates in a particular order to generate the ML pipeline.

In an embodiment, the ML pipeline may include a set of API call objects corresponding to the subset of templates, and the ML pipeline may be generated with default options which may be different from the options associated with the at least one pipeline component of the ML pipeline. An example of the subset of templates corresponding to the plurality of API methods is presented in Table 5, as follows:

**Table 5: Exemplary subset of templates**

| API Method | Template | Step | Option |
|---|---|---|---|
| clean_number | pd.to_numeric | 1 | 1 |
| clean_category | astype('str') | 2 | 1 |
| missing_number | SimpleImputer(missing_values=np.nan, strategy="mean") | 3 | 2 |
| missing_category | SimpleImputer(missing_values=np.nan, strategy="most_frequent") | 4 | 3 |
| | pd.fillna (const) | 4 | |
| Datetime | Year, month, day, weekday, hour | 5 | 2 |
| Text | TfIDF | 6 | 3 |
| | SML_template-preprocess-Processing + TFIDF | 6 | |
| Scaling | StandardScaler(with_mean=False) | 7 | 4 |
| | StandardScaler(with_mean=True) | 7 | |
| | np.loglp | 7 | |

From Table 5, it may be observed that the ML pipeline maybe generated by assembling the set of API call objects corresponding to the subset of templates in a sequence from "1" to "7". Data provided in Table 5 is merely an example and should not be construed as limiting the present disclosure.

Although the flowchart 500 is illustrated as discrete operations, such as 502, 504, and 506. However, in certain embodiments, such discrete operations may be further divided into additional operations, combined into fewer operations, or eliminated, depending on the particular implementation without detracting from the essence of the disclosed embodiments.

FIG. 6 is a diagram that illustrates a flowchart of an example method for generation of a ML pipeline recommendation, in accordance with an embodiment of the disclosure. FIG. 6 is described in conjunction with elements from FIG. 1, FIG. 2, FIG. 3, FIG. 4, and FIG. 6. With reference to FIG. 6, there is shown a flowchart 600. The method illustrated in the flowchart 600 may start at 602 and may be performed by any suitable system, apparatus, or device, such as the example system 102 of FIG. 1 or the processor 202 of FIG. 2.

At block 602, a recommendation model may be trained for the ML pipeline recommendation task on the training corpus of ML pipelines. In an embodiment, the processor 202 may be configured to train the recommendation model on the training corpus of ML pipelines. The recommendation model may be an ML model that may be trained to identify a relationship between inputs, such as features in a training dataset and output an ML pipeline recommendation. The training of the recommendation model may be executed in an online or offline phase using a suitable supervised learning approach, a semi-supervised learning approach, a self-supervised learning approach, or a unsupervised learning approach.

After the recommendation model is trained, the model may be ready for deployment on a server or a local workstation. After the deployment of the recommendation model, at block 604, a new tabular dataset that may be different from the set of tabular datasets 112 may be received. In an embodiment, the processor 202 may be configured to receive the new tabular dataset The new tabular dataset may be a dataset for which an ML pipeline recommendation needs to be provided.

At block 606, an input for the recommendation model may be generated based on the new tabular dataset. In an embodiment, the processor 202 may be configured to generate the input for the recommendation model based on the new tabular dataset. For example, dataset-level meta-features and/or column-level meta-features associated with the new tabular dataset may be extracted. The input may be generated based on the extracted dataset-level meta-features and/or the column-level meta-features .

At block 608, the input may be fed to the recommendation model. In an embodiment, the processor 202 may be configured to feed the input to the recommendation model.

At block 610, an ML pipeline recommendation may be generated as an output of the recommendation model for the input. In an embodiment, the processor 202 may be configured to generate the ML pipeline recommendation as the output of the recommendation model for the input The trained recommendation model may predict the ML pipeline to be used based on the input. For example, for a house price prediction dataset, the ML pipeline recommendation may include computer executable code to represent data preprocessing components (to preprocess the house price prediction dataset) and other components such as a feature engineering component and a model selection component (to train a regression model such as a linear regression model).

Although the flowchart 600 is illustrated as discrete operations, such as 602, 604, 606, 608, and 610. However, in certain embodiments, such discrete operations may be further divided into additional operations, combined into fewer operations, or eliminated, depending on the particular implementation without detracting from the essence of the disclosed embodiments.

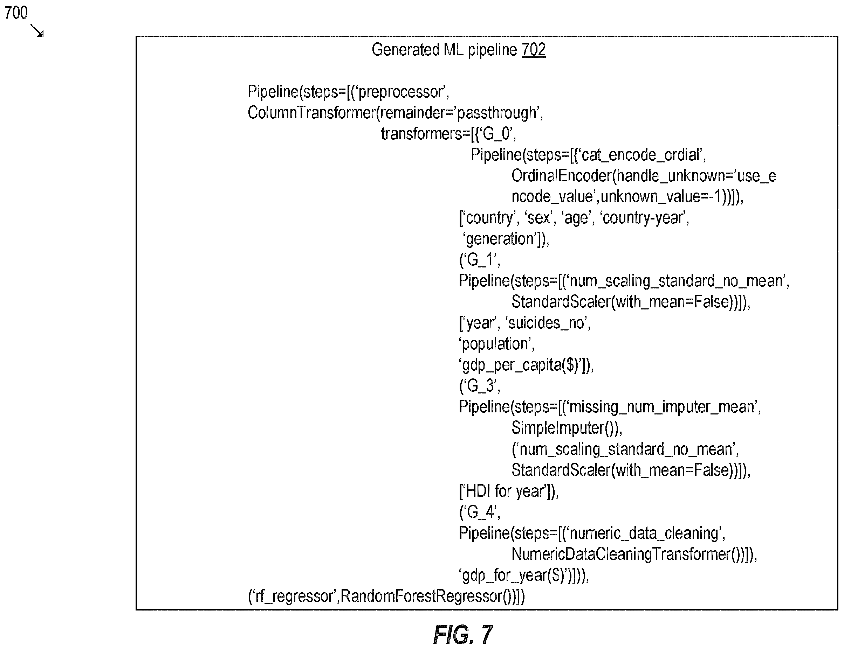

FIG. 7 is a diagram that illustrates an exemplary scenario for generation of a ML pipeline generated based on a subset of templates, in accordance with at least one embodiment described in the present disclosure. FIG. 7 is described in conjunction with elements from FIG. 1, FIG. 2, FIG. 3, FIG. 4, FIG. 5, and FIG. 6. With reference to FIG. 7, there is shown an exemplary scenario 700. The exemplary scenario 700 may include a generated ML pipeline 702.

As shown in FIG. 7, a programming library such as "scikit-learn" may be used to generate the ML pipeline 702. Specifically, the pipeline function and the column transformer function may be used to generate the ML pipeline. The programming library may assemble the subset of templates in a particular order to generate the ML pipeline 702. It should be noted that the scenario 700 of FIG. 7 is merely an example and such an example should not be construed as limiting limit the disclosure.

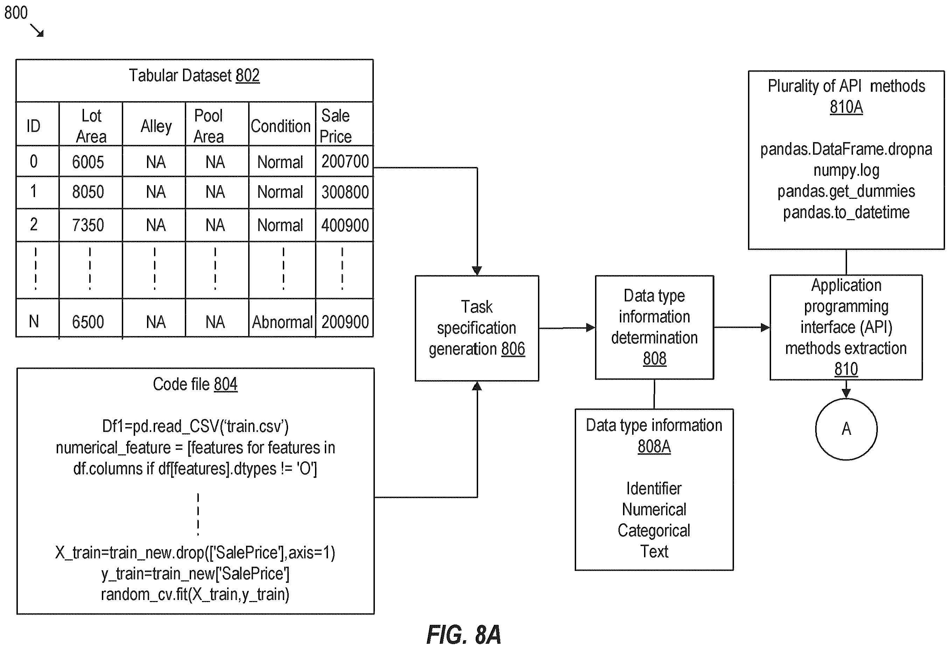

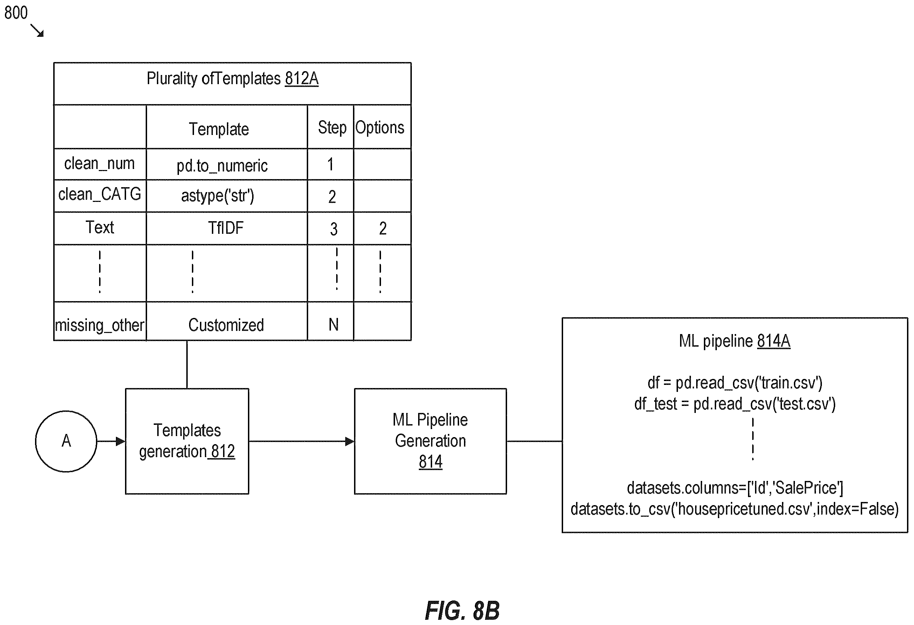

FIGs. 8A and 8B are diagrams that collectively illustrate an exemplary scenario for a ML pipeline generation based on data type information, a task specification, and a subset of templates, in accordance with atleast one embodiment described in the present disclosure. FIGs. 8A and 8B are described in conjunction with elements from FIG. 1, FIG. 2, FIG. 3, FIG. 4, FIG. 5, FIG. 6, and FIG. 7. With reference to FIGs. 8A and 8B, there is shown an exemplary scenario 800. The exemplary scenario 800 may include a tabular dataset 802, a code file 804, data type information 808A, a plurality of API methods 810A, templates 812A, and a ML pipeline 814A. The exemplary scenario 800 may include a set of operations 806, 808, 810, 812, and 814. The set of operations may be performed by the system 102 for generation of the ML pipeline based on data type information, as described herein. It should be noted that the scenario 800 of FIGs. 8A and 8B is for exemplary purposes and should not be construed to limit the scope of the disclosure.

At 806, an operation of task specification generation may be executed. In an embodiment, the processor 202 may be configured to generate the task specification corresponding to the tabular dataset 802. The tabular dataset 802 may be related to the house price prediction problem. The task specification for the tabular dataset 802 may include the type of the ML task as a regression task that can be performed using the tabular dataset 802. Further, the task specification for the tabular dataset 802 may include the target feature as "sale price". Details related to the task specification are further provided, for example, in FIG. 3.

At 808, an operation to determine data type information may be executed. In an embodiment, the processor 202 may be configured to determine the data type information 808A for features of the tabular dataset 802. With reference to FIG. 8A, the data type information 808A for the tabular dataset 802 may specify the feature type for each feature of the tabular dataset 802 as one of the ID type, the numerical type, the categorical type, and the text type. Details related to the data type information are further provided, for example, in FIG. 3 (at 306).

At 810, an operation to perform extraction of the plurality of API methods 810A may be executed. In an embodiment, the processor 202 maybe configured to extract the plurality of API methods 810A associated with ML pipeline components from the code file 804. Static program analysis methods may be used to extract the plurality of API methods 810A used in ML pipelines components of the code file 804. With reference to FIG. 8A, the plurality of API methods 810A may include "pandas.DataFrame.dropna", "numpy.log", "pandas.get_dummies", and "pandas.to_datetime". Details related to the extraction of API methods are further provided, for example, in FIG. 4.

At 812, an operation to generate a plurality of templates may be executed. In an embodiment, the processor 202 may be configured to generate the plurality of templates 812A corresponding to the plurality of API methods 810A. Thereafter, the processor 202 may be configured to select a subset of templates from the plurality of templates 812A based on the data type information, the task specification, and content of the tabular dataset 802. Details related to the plurality of templates generation are further provided, for example, in FIG. 5.

At 814, an operation to perform ML pipeline generation may be executed. In an embodiment, the processor 202 may be configured to generate the ML pipeline 814A based on the subset of templates. Details related to the ML pipeline generation are further provided, for example, in FIGs. 3 and 5. It should be noted that the scenario 800 of FIG. 8 is for exemplary purposes and should not be construed to limit the scope of the disclosure.

Various embodiments of the disclosure may provide one or more non-transitory computer-readable storage media configured to store instructions that, in response to being executed, cause a system (such as, the example system 102) to perform operations. The operations may include receiving data that comprises a set of tabular datasets (such as, the set of tabular datasets 112 of FIG. 1) and a set of code files (such as, the set of code files 114 of FIG. 1), each of which includes a computer-executable code for a Machine Learning (ML) task. The operations may include generating a task specification corresponding to each tabular dataset of the set of tabular datasets (such as, the set of tabular datasets 112 of FIG. 1). The operations may include determining data type information for features of each tabular dataset of the set of tabular datasets (such as, the set of tabular datasets 112 of FIG. 1). The operations may further include extracting, from the set of code files (such as, the set of code files 114 of FIG. 1), a plurality of application programming interface (API) methods associated with ML pipeline components. The operations may further include generating an ML pipeline based on the data type information and the task specification. The operations may further include obtaining variations of the ML pipeline based on options associated with at least one pipeline component of the ML pipeline. The operations may further include generating a database of ML pipelines based on the ML pipeline and the variations for each tabular dataset of the set of tabular datasets. The operations may further include selecting a set of candidate ML pipelines from the database of ML pipelines based on an optimization approach. The operations may further include executing the set of candidate ML pipelines to evaluate a performance of each candidate ML pipeline of the set of candidate ML pipelines on test data. The operations may further include obtaining a training corpus of ML pipelines from the set of evaluated ML pipelines for an ML pipeline recommendation task based on the evaluation.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the system 102. In some embodiments, the different components, modules, engines, and services described in the present disclosure may be implemented as objects or processes that execute on the system 102 (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any system 102 as previously defined in the present disclosure, or any module or combination of modulates running on a system 102.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

## Claims

1. A method, executable by a processor, comprising:
receiving data that comprises a set of tabular datasets and a set of code files, each of which includes a computer-executable code for a Machine Learning (ML) task;
generating a task specification corresponding to each tabular dataset of the set of tabular datasets;
determining data type information for features of each tabular dataset of the set of tabular datasets;
extracting, from the set of code files, a plurality of application programming interface (API) methods associated with ML pipeline components;
generating an ML pipeline based on the data type information and the task specification;
obtaining variations of the ML pipeline based on options associated with at least one pipeline component of the ML pipeline;
generating a database of ML pipelines based on the ML pipeline and the variations for each tabular dataset of the set of tabular datasets;
selecting a set of candidate ML pipelines from the database of ML pipelines based on an optimization approach;
executing the set of candidate ML pipelines to evaluate a performance of each candidate ML pipeline of the set of candidate ML pipelines on test data; and
obtaining a training corpus of ML pipelines from the set of evaluated ML pipelines for an ML pipeline recommendation task based on the evaluation.

2. The method according to claim 1, wherein the task specification for each tabular dataset of the set of tabular datasets includes a type of the ML task that is possible to perform using a corresponding tabular dataset and one or more target features of the corresponding tabular dataset that are required for the type of the ML task

3. The method according to claim 2, wherein the task specification for the task specification is determined by:
selecting one or more code files associated with each tabular dataset of the set of tabular datasets from the set of code files; and
performing a static program analysis of the one or more code files to extract the type of the ML task and the one or more target features.

4. The method according to claim 1, wherein the extraction of the plurality of API methods comprises:
selecting a code file from the set of code files;
parsing content of the code file to generate an abstract syntax tree (AST);
identifying, using the AST, a first API method that is used to load a tabular dataset of the set of tabular datasets and a second API method that is used to train an ML model on the tabular dataset;
identifying variables used in the second API method;
collecting an intermediate set of API methods that use at least one of the variables and occur between the first API method and the second API method in the code file; and
storing parent module names of the first API method, the second API method, and the intermediate set of API methods in a database,
wherein the first API method, the second API method, and the intermediate set of API methods are part of the plurality of API methods.

5. The method according to claim 1, wherein the ML pipeline components include a data pre-processing component, a feature selection component, a feature engineering component, a model selection component, and a model training component.

6. The method according to claim 1, further comprising:
generating a plurality of templates corresponding to the plurality of API methods;
selecting a subset of templates from the plurality of templates based on the data type information, the task specification, and content of a corresponding tabular dataset of the set of tabular datasets; and
generating the ML pipeline based on the subset of templates.

7. The method according to claim 6, wherein each template of the plurality of templates is an API call object with one or more features from the corresponding tabular dataset as an input for the API call object.

8. The method according to claim 6, wherein the ML pipeline includes a set of API call objects corresponding to the subset of templates, and the ML pipeline is generated with default options which are different from the options associated with the at least one pipeline component of the ML pipeline.

9. The method according to claim 1, wherein each of the options correspond to an optional parameter that is acceptable to an API method of the plurality of API methods, an algorithm that is acceptable to the API method, a choice to skip the API method for the generation of the ML pipeline, or a choice for an ML model for the ML pipeline.

10. The method according to claim 1, wherein the selection of the set of candidate ML pipelines from the database of ML pipelines is performed iteratively based on an ML metadata model or an optimization search model.

11. The method according to claim 1, wherein the optimization approach uses a Bayesian Optimization approach.

12. The method according to claim 1, further comprising:
training a posterior distribution model on records of the database of ML pipelines; and
using the optimization approach with the trained posterior distribution model to select the set of candidate ML pipelines from a database of ML pipelines.

13. The method according to claim 1, further comprising training a plurality of posterior distribution models on records of the database of ML pipelines,
wherein the set of candidate ML pipelines is selected using the trained plurality of posterior distribution models.

14. The method according to claim 13, wherein each posterior distribution model of the plurality of posterior distribution models is trained on features of the records corresponding to a tabular dataset of the set of tabular datasets.

15. The method according to claim 13, wherein the plurality of posterior distribution models are trained to be used for a hierarchical selection of the set of candidate ML pipelines.

16. The method according to claim 1, wherein the training corpus of ML pipelines includes at least a subset of the set of evaluated ML pipelines and the training corpus is obtained based on a determination that the performance for each pipeline of the subset is above a threshold performance.

17. The method according to claim 1, wherein the database of ML pipelines includes statistical features associated with the set of tabular datasets, learning-based meta features associated with the set of tabular datasets, or hybrid meta-features associated with the set of tabular datasets.

18. The method according to claim 1, further comprising:
training a recommendation model for the ML pipeline recommendation task on the training corpus of ML pipelines;
receiving, after a deployment of the recommendation model, a new tabular dataset that is different from the set of tabular datasets;
generating an input for the recommendation model based on the new tabular dataset;
feeding the input to the recommendation model; and
generating an ML pipeline recommendation as an output of the recommendation model for the input.

19. One or more non-transitory computer-readable storage media configured to store instructions that, in response to being executed, cause a system to perform operations, the operations comprising:
receiving data that comprises a set of tabular datasets and a set of code files, each of which includes a computer-executable code for a Machine Learning (ML) task;
generating a task specification corresponding to each tabular dataset of the set of tabular datasets;
determining data type information for features of each tabular dataset of the set of tabular datasets;
extracting, from the set of code files, a plurality of application programming interface (API) methods associated with ML pipeline components;
generating an ML pipeline based on the data type information and the task specification;
obtaining variations of the ML pipeline based on options associated with at least one pipeline component of the ML pipeline;
generating a database of ML pipelines based on the ML pipeline and the variations for each tabular dataset of the set of tabular datasets;
selecting a set of candidate ML pipelines from the database of ML pipelines based on an optimization approach;
executing the set of candidate ML pipelines to evaluate a performance of each candidate ML pipeline of the set of candidate ML pipelines on test data; and
obtaining a training corpus of ML pipelines from the set of evaluated ML pipelines for an ML pipeline recommendation task based on the evaluation.

20. A system, comprising:
a memory configured to store instructions; and
a processor, coupled to the memory, configured to execute the instructions to perform a process comprising:
receiving data that comprises a set of tabular datasets and a set of code files, each of which includes a computer-executable code for a Machine Learning (ML) task;
generating a task specification corresponding to each tabular dataset of the set of tabular datasets;
determining data type information for features of each tabular dataset of the set of tabular datasets;
extracting, from the set of code files, a plurality of application programming interface (API) methods associated with ML pipeline components;
generating an ML pipeline based on the data type information and the task specification;
obtaining variations of the ML pipeline based on options associated with at least one pipeline component of the ML pipeline;
generating a database of ML pipelines based on the ML pipeline and the variations for each tabular dataset of the set of tabular datasets;
selecting a set of candidate ML pipelines from the database of ML pipelines based on an optimization approach;
executing the set of candidate ML pipelines to evaluate a performance of each candidate ML pipeline of the set of candidate ML pipelines on test data; and
obtaining a training corpus of ML pipelines from the set of evaluated ML pipelines for an ML pipeline recommendation task based on the evaluation.
